# EUROPEAN PATENT APPLICATION

(11) **EP 4 615 054 A1**
(43) Date of publication of application: **10.09.2025**
(21) Application number: 23884993.9
(22) Date of filing: 01.11.2023
(51) Int. Cl.: H04W 36/00, H04W 48/16

(54) **METHOD AND APPARATUS FOR TRANSMITTING MEASUREMENT RESULT**

(30) Priority: 04.11.2022 CN 202211378340
(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN)
(74) Representative: Epping - Hermann - Fischer
(86) International application number: PCT/CN2023/129086
(87) International publication number: WO 2024/094067

(57) **Abstract**

This application provides a measurement result transmission method and an apparatus, and may be applied to a scenario in which a terminal device hands over a serving cell. The method includes: A terminal device performs measurement in a current serving cell based on reference signal RS measurement configuration information, of at least one candidate neighboring cell, that is configured by a first network device, to determine that a part of RS measurement results are reported by the terminal device to a second network device in a cell after handover. In this way, after the terminal device performs cell handover, the terminal device does not need to measure the current serving cell, namely, a neighboring cell before the handover, again, but directly inherits a measurement result of a neighboring cell beam before the handover. This helps reduce a communication delay, and improve user experience.

## Description

This application claims priority to Chinese Patent Application No. 202211378340.9, filed with the China National Intellectual Property Administration on November 4, 2022, and entitled "MEASUREMENT RESULT TRANSMISSION METHOD AND APPARATUS", which is incorporated herein by reference in its entirety.

### TECHNICAL FIELD

This application relates to the wireless communication field, and more specifically, to a measurement result transmission method and an apparatus.

### BACKGROUND

In a 5th generation (5th generation, 5G) mobile communication system, before performing cell handover, a terminal may measure a synchronization signal block (synchronization signal block, SSB) signal of a neighboring cell, and report a measurement result to a serving cell. The serving cell requests a random access resource from the neighboring cell based on the measurement result reported by the terminal. The terminal initiates random access in a target neighboring cell based on the resource, establishes uplink synchronization, and obtains uplink timing. However, during actual communication, to enable the terminal to quickly scan an SSB during initial access, improve SSB coverage, and reduce SSB sending overheads, an SSB beam is usually a wide beam. To enable the terminal to have better signal received power, a network device can determine a narrow beam with good quality through beam training, for the terminal to determine a reception beam with good quality.

However, after the terminal performs cell handover, beam training and channel information obtaining are performed in a new cell again. Consequently, data transmission of the terminal is interrupted for a long time, and user experience is poor.

### SUMMARY

This application provides a measurement result transmission method and an apparatus, to help reduce a communication delay, and improve user experience.

According to a first aspect, a measurement result transmission method is provided. The method includes: A terminal device determines a first reference signal (reference signal, RS) measurement result in a first cell, where the first cell is a current serving cell of the terminal device, and the first RS measurement result belongs to a subset of an RS measurement result of at least one candidate neighboring cell; and the terminal device hands over the serving cell from the first cell to a second cell, and sends the first RS measurement result to a second network device in the second cell.

A first network device is located in the first cell, the second network device is located in the second cell, that the first cell is the current serving cell of the terminal device may also be explained as that the first cell is a serving cell before the terminal device performs cell handover, and the second cell is a cell after the terminal device performs cell handover. That the first RS measurement result belongs to the subset of the RS measurement result of the at least one candidate neighboring cell may also be explained as that the first RS measurement result includes a part or all of the RS measurement result of the at least one candidate neighboring cell. That the terminal device hands over the serving cell from the first cell to the second cell may also be directly represented as that the terminal device hands over from the first cell to the second cell. In this application, an RS may include a channel state information-reference signal (channel state information-reference signal, CSI-RS), and the CSI-RS may also be replaced with a synchronization signal block SSB. In other words, the foregoing method may also be performed based on a measurement result of an SSB of a neighboring cell, and the measurement result is inherited after handover.

According to the technical solution of this application, after the terminal device hands over the serving cell, the terminal device does not need to measure the current serving cell, namely, a neighboring cell before the handover, again, and directly inherits a measurement result of a neighboring cell beam before the handover. This helps reduce a communication delay, and improve user experience.

With reference to the first aspect, in some implementations of the first aspect, that the terminal device hands over the serving cell from the first cell to a second cell includes: The terminal device receives handover indication information from the first network device, and hands over the serving cell from the first cell to the second cell based on the handover indication information.

With reference to the first aspect, in some implementations of the first aspect, that a terminal device determines a first RS measurement result in a first cell includes: The terminal device determines the first RS measurement result in the first cell based on the handover indication information. The handover indication information may indicate an identifier of a specific cell, and the terminal device may determine, based on the identifier, an RS measurement result corresponding to the cell as the first RS measurement result.

With reference to the first aspect, in some implementations of the first aspect, before that a terminal device determines a first RS measurement result in a first cell, the method further includes: The terminal device receives RS measurement configuration information of the at least one candidate neighboring cell from the first network device, and performs measurement in the first cell based on the RS measurement configuration information of the at least one candidate neighboring cell, to obtain the RS measurement result of the at least one candidate neighboring cell; and that a terminal device determines a first RS measurement result in a first cell includes: the terminal device determines a second RS measurement result in the first cell based on the RS measurement result of the at least one candidate neighboring cell, where the second RS measurement result is a subset of the RS measurement result of the at least one candidate neighboring cell; and the terminal device determines the first RS measurement result based on the handover indication information and the second RS measurement result, where the first RS measurement result is a subset of the second RS measurement result.

With reference to the first aspect, in some implementations of the first aspect, the RS measurement configuration information of the at least one candidate neighboring cell includes at least one of the following: an index of a synchronization signal block SSB associated with an RS of the at least one candidate neighboring cell, a power offset of an RS of the at least one candidate neighboring cell relative to an SSB of the at least one candidate neighboring cell, a scrambling identifier of an RS of the at least one candidate neighboring cell, a bandwidth of an RS of the at least one candidate neighboring cell, a frequency domain position of an RS of the at least one candidate neighboring cell, or a time domain position of an RS of the at least one candidate neighboring cell. Optionally, the RS measurement configuration information of the at least one candidate neighboring cell may further include other information related to the RS measurement configuration information. For example, any RS measurement resource may be associated with a cell identifier of a neighboring cell, or an RS resource belongs to a part of preconfigured neighboring cell configuration information.

With reference to the first aspect, in some implementations of the first aspect, that the terminal device determines a second RS measurement result includes: The terminal device determines, based on capability information of the terminal device, a quantity of cells associated with the second RS measurement result; or the terminal device determines, based on preconfiguration information, a quantity of cells associated with the second RS measurement result.

With reference to the first aspect, in some implementations of the first aspect, the second RS measurement result is one or more RS measurement results that are in the RS measurement result of the at least one candidate neighboring cell and that are greater than a first threshold, and the first threshold is a preset value; or the second RS measurement result is first N RS measurement results that are in the RS measurement result of the at least one candidate neighboring cell and whose quality values are sorted in descending order, and N is a positive integer. The first threshold and a specific value of N may be configured by the first network device for the terminal device by using the measurement configuration information, the handover indication information, or configuration information carried in other radio resource control (radio resource control, RRC), or indicated to the terminal device by using indication information carried in a media access control (media access control, MAC) control element (control element, CE).

With reference to the first aspect, in some implementations of the first aspect, that the terminal device performs measurement in the first cell based on the RS measurement configuration information of the at least one candidate neighboring cell, to obtain the RS measurement result of the at least one candidate neighboring cell includes: The terminal device performs measurement in the first cell based on the RS measurement configuration information of the at least one candidate neighboring cell within valid duration of the RS measurement configuration information of the at least one candidate neighboring cell, to obtain the RS measurement result of the at least one candidate neighboring cell.

With reference to the first aspect, in some implementations of the first aspect, a start moment of the valid duration of the RS measurement configuration information of the at least one candidate neighboring cell is a moment at which the RS measurement configuration information of the at least one candidate neighboring cell is received; and an end moment of the valid duration of the RS measurement configuration information of the at least one candidate neighboring cell is an X^{th} slot after the RS measurement configuration information of the at least one candidate neighboring cell is received, and X is a positive integer; or an end moment of the valid duration of the RS measurement configuration information of the at least one candidate neighboring cell is a Y^{th} millisecond after the RS measurement configuration information of the at least one candidate neighboring cell is received, and Y is a positive integer; or an end moment of the valid duration of the RS measurement configuration information of the at least one candidate neighboring cell is a moment at which reconfigured RS measurement configuration information of the at least one candidate neighboring cell is received.

With reference to the first aspect, in some implementations of the first aspect, the terminal device stores the second RS measurement result within valid duration of the second RS measurement result; or the terminal device stores the first RS measurement result within valid duration of the first RS measurement result.

With reference to the first aspect, in some implementations of the first aspect, a start moment of the valid duration of the first RS measurement result is a moment at which the serving cell of the terminal device is handed over from the first cell to the second cell, or a moment at which the terminal device obtains the first RS measurement result, or a moment at which the terminal device reports the first RS measurement result in the first cell; and an end moment of the valid duration of the first RS measurement result is an M^{th} slot after the first RS measurement result is obtained, and M is a positive integer; or an end moment of the valid duration of the first RS measurement result is an N^{th} millisecond after the first RS measurement result is obtained, and N is a positive integer; or an end moment of the valid duration of the first RS measurement result is a moment at which RS measurement is performed again. Correspondingly, a start moment of the valid duration of the second RS measurement result is a moment at which the serving cell of the terminal device is handed over from the first cell to the second cell, or a moment at which the terminal device obtains the second RS measurement result; and an end moment of the valid duration of the second RS measurement result is a K^{th} slot after the second RS measurement result is obtained, and K is a positive integer; or an end moment of the valid duration of the second RS measurement result is an L^{th} millisecond after the second RS measurement result is obtained, and L is a positive integer; or an end moment of the valid duration of the second RS measurement result is a moment at which RS measurement is performed again. The valid duration of the first RS measurement result and the valid duration of the second RS measurement result may be the same or may be different.

According to a second aspect, a measurement result transmission method is provided. The method includes: A first network device sends channel state information-reference signal RS measurement configuration information of at least one candidate neighboring cell in a first cell; a terminal device determines a first RS measurement result in the first cell based on the RS measurement configuration information of the at least one candidate neighboring cell, where the first cell is a current serving cell of the terminal device; and the terminal device hands over the serving cell from the first cell to a second cell, and sends the first RS measurement result to a second network device in the second cell.

The first network device is located in the first cell, the second network device is located in the second cell, that the first cell is the current serving cell of the terminal device may also be explained as that the first cell is a serving cell before the terminal device performs cell handover, and the second cell is a cell after the terminal device performs cell handover. That the first RS measurement result belongs to a subset of an RS measurement result of the at least one candidate neighboring cell may also be explained as that the first RS measurement result includes a part or all of the RS measurement result of the at least one candidate neighboring cell.

According to the technical solution of this application, after the terminal device hands over the serving cell, the terminal device does not need to measure the current serving cell, namely, a neighboring cell before the handover, again, and directly inherits a measurement result of a neighboring cell beam before the handover. This helps reduce a communication delay, and improve user experience.

With reference to the second aspect, in some implementations of the second aspect, the method further includes: The first network device sends handover indication information to the terminal device, where the handover indication information indicates the terminal device to hand over the serving cell from the first cell to the second cell; and that a terminal device determines a first RS measurement result in the first cell based on the RS measurement configuration information of the at least one candidate neighboring cell includes: the terminal device determines a second RS measurement result based on the RS measurement configuration information of the at least one candidate neighboring cell, where the second RS measurement result is a subset of the RS measurement result of the at least one candidate neighboring cell; and the terminal device determines the first RS measurement result based on the handover indication information and the second RS measurement result, where the first RS measurement result is a subset of the second RS measurement result.

According to a third aspect, a measurement result transmission method is provided. The method includes: A terminal device receives, in a first cell, an association relationship, between a first reference signal RS measurement result and a first beam, from a first network device, where the first beam is a beam of a second cell, the first cell is a current serving cell, the second cell is a cell after handover, and the second cell is one or more of neighboring cells of the first cell; and the terminal device determines, based on the association relationship, that the first beam is a beam that is of the second cell and that is activated by the terminal device in the first cell.

The first network device is located in the first cell, and the first beam may be one or more beams. Before the first network device sends the association relationship between the first RS measurement result and the first beam to the terminal device, the terminal device may send a plurality of RS measurement results to the first network device in the first cell. The plurality of RS measurement results include the first RS measurement result. In other words, the terminal device needs to first send, to the first network device in the current serving cell, the plurality of RS measurement results obtained through measurement. The first network device screens the plurality of RS measurement results to obtain the first RS measurement result, and associates the first RS measurement result with a beam of a cell after the terminal device performs handover in the future. The first RS measurement result is a part or all of the plurality of RS measurement results. For example, a cell associated with the first RS measurement result may be one or more cells with good quality of service, or a cell associated with the first RS measurement result may be a cell whose quality of service is greater than a specific threshold. An RS may specifically include a channel state information-reference signal CSI-RS. In this way, a neighboring cell beam is preconfigured, so that the terminal device can measure a corresponding reference signal before performing cell handover, and can track an activated beam of a target cell in advance; and after cell handover, a beam indication delay is reduced.

Optionally, the first network device may alternatively send indication information to the terminal device, where the indication information indicates an activated beam after the terminal device performs cell handover.

Optionally, the first network device may alternatively not send an association relationship or indication information to the terminal device, and directly activate, for the terminal device, an activated beam after the terminal device performs cell handover. In other words, the first network device directly sends transmission configuration indication (transmission configuration indication, TCI) state configuration information of the neighboring cell to the terminal device. For example, the first network device sends activation signaling to the terminal device based on the measurement result received from the terminal device, to activate a beam or TCI state of the second cell (a cell after cell handover is performed) when the terminal device performs communication in the first cell (a cell before cell handover is performed). The activation signaling may include an identifier of the target cell and an identifier of the activated TCI of the activated beam, and the identifier of the activated TCI is an identifier, of the TCI state, configured for the target cell.

With reference to the third aspect, in some implementations of the third aspect, the method further includes: The terminal device receives handover indication information from the first network device; and after handing over the serving cell from the first cell to the second cell based on the handover indication information, determines the first beam as the activated beam, where the handover indication information may include the first beam. Determining the first beam as the activated beam specifically includes: associating a code point with the first beam. For example, if the first beam is associated with a code point "000", a second network device may further send downlink control information (downlink control information, DCI) signaling in the second cell, where the downlink control information signaling indicates a value "000" of a bit field of the beam, that is, indicates that a reception or transmission beam of the terminal is determined as the first beam. After a beam indication takes effect, the terminal may receive a downlink signal or channel based on the first beam, or send an uplink signal or channel based on the first beam.

With reference to the third aspect, in some implementations of the third aspect, the first beam may be a transmission configuration indication TCI, a synchronization signal block SSB, or an RS.

With reference to the third aspect, in some implementations of the third aspect, the activated beam includes at least one of the following: a code point associated with the activated TCI state; and after receiving a beam indication to activate a beam for specific duration, the terminal device can receive or send data based on the indicated beam; or the terminal device includes, in a measurement report, a measurement result of a reference signal associated with the TCI state.

With reference to the third aspect, in some implementations of the third aspect, the first beam includes the beam indicated by the handover indication information.

According to a fourth aspect, a measurement result transmission method is provided. The method includes: A first network device receives, in a first cell, a plurality of channel state information-reference signal RS measurement results from a terminal device, and determines and sends an association relationship between a first RS measurement result and a first beam to a terminal device, where the first beam is a beam of a second cell, the first cell is a current serving cell, the second cell is a cell after handover, and the second cell is one or more of neighboring cells of the first cell.

The first network device is located in the first cell, and the first beam may be one or more beams. The first network device screens the plurality of RS measurement results to obtain the first RS measurement result, and associates the first RS measurement result with a beam of a cell after the terminal device performs handover in the future. The first RS measurement result is a part or all of the plurality of RS measurement results. For example, a cell associated with the first RS measurement result may be one or more cells with good quality of service, or a cell associated with the first RS measurement result may be a cell whose quality of service is greater than a specific threshold. An RS may specifically include a channel state information-reference signal CSI-RS. In this way, a neighboring cell beam is preconfigured, so that the terminal device can measure a corresponding reference signal before performing cell handover, and can track an activated beam of a target cell in advance; and after cell handover, a beam indication delay is reduced.

Optionally, the first network device may alternatively send indication information to the terminal device, where the indication information indicates an activated beam after the terminal device performs cell handover.

Optionally, the first network device may alternatively not send an association relationship or indication information to the terminal device, and directly activate, for the terminal device, an activated beam after the terminal device performs cell handover. In other words, the first network device directly sends TCI state configuration information of the neighboring cell to the terminal device. For example, the first network device sends activation signaling to the terminal device based on the measurement result received from the terminal device, where the activation signaling is used to activate a beam or a TCI state of the second cell (a cell after cell handover is performed) when the terminal device performs communication in the first cell (a cell before cell handover is performed). Optionally, after performing cell handover, the terminal device maintains an activated TCI state of the second cell. Optionally, the terminal reports the activated TCI state to the second network device in the second cell. For example, the terminal may report at least one activated TCI state in ascending order of code points, or explicitly report a code point and the TCI state associated with the code point. Before reporting the activated TCI state, the terminal device may further send a scheduling request message to the second network device, where the scheduling request message is used to request an uplink resource for reporting the activated TCI state. Optionally, the first network device may indicate, to the second network device by using higher layer signaling (including but not limited to F1-AP signaling and Xn interface signaling), the activated TCI state of the second cell of the terminal device.

With reference to the fourth aspect, in some implementations of the fourth aspect, the method further includes: The first network device sends handover indication information to the terminal device, where the handover indication information indicates the terminal device to hand over the serving cell from the first cell to the second cell.

With reference to the fourth aspect, in some implementations of the fourth aspect, the first beam may be a transmission configuration indication TCI or a synchronization signal block SSB.

With reference to the fourth aspect, in some implementations of the fourth aspect, the activated beam includes at least one of the following: a code point associated with the activated TCI state; and after receiving a beam indication to activate a beam for specific duration, the terminal device can receive or send data based on the indicated beam; or the terminal device includes, in a measurement report, a measurement result of a reference signal associated with the TCI state.

With reference to the fourth aspect, in some implementations of the fourth aspect, the first beam includes the beam indicated by the handover indication information.

According to a fifth aspect, a measurement result transmission method is provided. The method includes: A terminal device receives, in a first cell, measurement configuration information from a first network device, where the measurement configuration information includes at least one channel state information-reference signal CSI-RS resource, the first cell is a current serving cell of the terminal device, and the CSI-RS resource is associated with a first neighboring cell; performs measurement in the first cell based on the measurement configuration information, to obtain a CSI measurement result of the first neighboring cell; and hands over the serving cell from the first cell to a second cell, and sends the CSI measurement result of the first neighboring cell to a second network device in the second cell.

The configuration information may include a plurality of CSI-RS resources, the first neighboring cell includes one or more neighboring cells, and that the CSI-RS resource is associated with the first neighboring cell may be explained as that one CSI-RS resource corresponds to one neighboring cell, or a plurality of CSI-RS resources correspond to one neighboring cell. The first network device is located in the first cell, and the second network device is located in the second cell.

In this way, the terminal device may measure a CSI-RS of the neighboring cell based on the measurement configuration information, and determine channel state information corresponding to the CSI-RS. The channel state information includes a transmission order (rank indication, RI), a precoding matrix (precoding matrix indicator, PMI), downlink channel quality information (channel quality indicator, CQI), and the like. Before performing cell handover, the terminal device may determine a beam on which a CSI of the neighboring cell needs to be measured, and actively report the beam to a new cell after the handover. This helps reduce a beam indication delay.

With reference to the fifth aspect, in some implementations of the fifth aspect, the configuration information further includes one or more of a transmission configuration indication TCI state, quasi-co-location (quasi-co-location, QCL) information, or reference signal information used for reference. The TCI state information, the quasi-co-location QCL information, and the reference signal information used for reference are all associated with the first neighboring cell. That the TCI state information is associated with the first neighboring cell may be explained as that one piece of TCI state information corresponds to one neighboring cell, or a plurality of pieces of TCI state information correspond to a plurality of neighboring cells; that the QCL information is associated with the first neighboring cell may be explained as that one piece of QCL information corresponds to one neighboring cell, or a plurality of pieces of QCL information correspond to a plurality of neighboring cells; and that the reference signal information used for reference is associated with the first neighboring cell may be explained as that one piece of reference signal information used for reference corresponds to one neighboring cell, or a plurality of pieces of reference signal information used for reference correspond to a plurality of neighboring cells.

With reference to the fifth aspect, in some implementations of the fifth aspect, the CSI measurement result of the first neighboring cell includes N CSI measurement results, N is a maximum quantity, of pieces of CSI, that can be measured and that is preconfigured or reported by the terminal device, and N is a positive integer. In other words, a quantity of measurement results included in the CSI measurement result of the first neighboring cell needs to be less than or equal to a quantity preconfigured for the terminal device, or less than or equal to a maximum quantity that can be measured and that is reported by the terminal device.

With reference to the fifth aspect, in some implementations of the fifth aspect, the CSI measurement result of the first neighboring cell includes CSI measurement results corresponding to first M reference signals RSs on which the terminal device performs L 1 or L3 reporting and whose reference signal received power RSRP values are sorted in descending order, and M is a positive integer; or the CSI measurement result of the first neighboring cell includes first M best measurement results (for example, reference signal received power (reference signal received power, RSRP) values) in measurement results last reported by the terminal device; or the network device explicitly configures first M best measurement results (for example, RSRP values) in a specific measurement resource set.

With reference to the fifth aspect, in some implementations of the fifth aspect, a start moment of valid duration of the CSI measurement result of the first neighboring cell is a moment at which the CSI measurement result of the first neighboring cell is obtained; and an end moment of the valid duration of the CSI measurement result of the first neighboring cell is an X^{th} slot after the CSI measurement result of the first neighboring cell is obtained, and X is a positive integer; or an end moment of the valid duration of the CSI measurement result of the first neighboring cell is a Y^{th} millisecond after the CSI measurement result of the first neighboring cell is obtained, and Y is a positive integer; or an end moment of the valid duration of the CSI measurement result of the first neighboring cell is a start moment of a next CSI measurement periodicity.

With reference to the fifth aspect, in some implementations of the fifth aspect, before sending the CSI measurement result of the first neighboring cell to the second network device in the second cell, the terminal device further receives handover indication information from the first network device, where the handover indication information indicates the terminal device to hand over the serving cell from the first cell to the second cell.

With reference to the fifth aspect, in some implementations of the fifth aspect, before sending the CSI measurement result of the first neighboring cell in the second cell, the terminal device further sends uplink indication information in the second cell, where the uplink indication information indicates a first beam, and the first beam is associated with the CSI measurement result of the first neighboring cell within the valid duration.

According to a sixth aspect, a measurement result transmission method is provided. The method includes: A first network device determines measurement configuration information, where the measurement configuration information includes a channel state information-reference signal CSI-RS resource, a first cell is a current serving cell of a terminal device, and the CSI-RS resource is associated with a first neighboring cell; and sends the measurement configuration information to the terminal device.

The configuration information includes a plurality of CSI-RS resources, the first neighboring cell includes one or more neighboring cells, and that the CSI-RS resource is associated with the first neighboring cell may be explained as that one CSI-RS resource corresponds to one neighboring cell, or a plurality of CSI-RS resources correspond to one neighboring cell. The first network device is located in the first cell, and the second network device is located in the second cell.

In this way, before performing cell handover, the terminal device may determine a beam on which a CSI of the neighboring cell needs to be measured, and actively report the beam to a new cell after the handover. This helps reduce a beam indication delay.

With reference to the sixth aspect, in some implementations of the sixth aspect, the configuration information further includes a transmission configuration indication TCI state, quasi-co-location QCL information, or reference signal information used for reference. The TCI state information, the quasi-co-location QCL information, and the reference signal information used for reference are all associated with the first neighboring cell. That the TCI state information is associated with the first neighboring cell may be explained as that one piece of TCI state information corresponds to one neighboring cell, or a plurality of pieces of TCI state information correspond to a plurality of neighboring cells; that the QCL information is associated with the first neighboring cell may be explained as that one piece of QCL information corresponds to one neighboring cell, or a plurality of pieces of QCL information correspond to a plurality of neighboring cells; and that the reference signal information used for reference is associated with the first neighboring cell may be explained as that one piece of reference signal information used for reference corresponds to one neighboring cell, or a plurality of pieces of reference signal information used for reference correspond to a plurality of neighboring cells.

With reference to the sixth aspect, in some implementations of the sixth aspect, the CSI measurement result of the first neighboring cell includes N CSI measurement results, N is a maximum quantity, of pieces of CSI that can be measured, that is preconfigured or reported by the terminal device, and N is a positive integer. In other words, a quantity of measurement results included in the CSI measurement result of the first neighboring cell needs to be less than or equal to a quantity preconfigured for the terminal device, or less than or equal to a maximum quantity that can be measured and that is reported by the terminal device.

With reference to the sixth aspect, in some implementations of the sixth aspect, the CSI measurement result of the first neighboring cell includes CSI measurement results corresponding to first M reference signals RSs on which the terminal device performs L 1 or L3 reporting and whose reference signal received power RSRP values are sorted in descending order, and M is a positive integer; or the CSI measurement result of the first neighboring cell includes first M best measurement results (for example, RSRP values) in measurement results last reported by the terminal device; or the network device explicitly configures first M best measurement results (for example, RSRP values) in a specific measurement resource set.

With reference to the sixth aspect, in some implementations of the sixth aspect, a start moment of valid duration of the CSI measurement result of the first neighboring cell is a moment at which the CSI measurement result of the first neighboring cell is obtained; and an end moment of the valid duration of the CSI measurement result of the first neighboring cell is an X^{th} slot after the CSI measurement result of the first neighboring cell is obtained, and X is a positive integer; or an end moment of the valid duration of the CSI measurement result of the first neighboring cell is a Y^{th} millisecond after the CSI measurement result of the first neighboring cell is obtained, and Y is a positive integer; or an end moment of the valid duration of the CSI measurement result of the first neighboring cell is a start moment of a next CSI measurement periodicity.

With reference to the sixth aspect, in some implementations of the sixth aspect, the first network device further sends handover indication information to the terminal device, where the handover indication information indicates the terminal device to hand over the serving cell from the first cell to the second cell.

With reference to the sixth aspect, the second network device receives, in the second cell, the CSI measurement result of the first neighboring cell from the terminal device. Before receiving, in the second cell, the CSI measurement result of the first neighboring cell from the terminal device, the second network device further receives, in the second cell, uplink indication information from the network device, where the uplink indication information indicates a first beam, and the first beam is associated with the CSI measurement result of the first neighboring cell within the valid duration.

According to a seventh aspect, a measurement result transmission apparatus is provided. The apparatus is configured to implement a function of a terminal device according to the first aspect, or is a terminal device. The apparatus includes: a processing unit, configured to determine a first channel state information-reference signal RS measurement result in a first cell, where the first cell is a current serving cell of the terminal device, and the first RS measurement result belongs to a subset of an RS measurement result of at least one candidate neighboring cell, where the processing unit is further configured to hand over the serving cell from the first cell to a second cell; and a transceiver unit, configured to send the first RS measurement result to a second network device in the second cell.

With reference to the seventh aspect, in some implementations of the seventh aspect, the transceiver unit is further configured to receive handover indication information from a first network device, and the processing unit is specifically configured to hand over the serving cell from the first cell to the second cell based on the handover indication information.

With reference to the seventh aspect, in some implementations of the seventh aspect, the processing unit is specifically configured to determine the first RS measurement result in the first cell based on the handover indication information.

With reference to the seventh aspect, in some implementations of the seventh aspect, the transceiver unit is further configured to receive RS measurement configuration information of the at least one candidate neighboring cell from the first network device; the processing unit is specifically configured to determine a second RS measurement result in the first cell based on the RS measurement result of the at least one candidate neighboring cell, where the second RS measurement result is a subset of the RS measurement result of the at least one candidate neighboring cell; and the terminal device determines the first RS measurement result based on the handover indication information and the second RS measurement result, where the first RS measurement result is a subset of the second RS measurement result.

With reference to the seventh aspect, in some implementations of the seventh aspect, the processing unit is specifically configured to: determine, based on capability information of the terminal device, a quantity of cells associated with the second RS measurement result; or determine, based on preconfiguration information, a quantity of cells associated with the second RS measurement result.

With reference to the seventh aspect, in some implementations of the seventh aspect, the processing unit is specifically configured to perform measurement in the first cell based on the RS measurement configuration information of the at least one candidate neighboring cell within valid duration of the RS measurement configuration information of the at least one candidate neighboring cell, to obtain the RS measurement result of the at least one candidate neighboring cell.

With reference to the seventh aspect, in some implementations of the seventh aspect, the processing unit is further configured to: store the second RS measurement result within valid duration of the second RS measurement result; or store the first RS measurement result within valid duration of the first RS measurement result.

According to an eighth aspect, a measurement result transmission apparatus is provided. The apparatus is configured to implement a function of a first network according to the first aspect, or is a first network device. The apparatus includes: a processing unit, configured to determine RS measurement configuration information of at least one candidate neighboring cell; and a transceiver unit, configured to send the RS measurement configuration information of the at least one candidate neighboring cell in a first cell.

With reference to the eighth aspect, in some implementations of the eighth aspect, the transceiver unit is further configured to send handover indication information to a terminal device, where the handover indication information indicates the terminal device to hand over a serving cell from the first cell to a second cell.

According to a ninth aspect, a measurement result transmission apparatus is provided. The apparatus is configured to implement a function of a terminal device according to the third aspect, or is a terminal device. The apparatus includes: a transceiver unit, configured to receive, in a first cell, an association relationship, between a first reference signal RS measurement result and a first beam, from a first network device; and a processing unit, configured to determine, based on the association relationship, that the first beam is a beam that is of the second cell and that is activated by the terminal device in the first cell.

With reference to the ninth aspect, in some implementations of the ninth aspect, the transceiver unit is further configured to receive handover indication information from the first network device; and after handing over the serving cell from the first cell to the second cell based on the handover indication information, the processing unit is further configured to determine the first beam as the activated beam.

According to a tenth aspect, a measurement result transmission apparatus is provided. The apparatus is configured to implement a function of a first network according to the fourth aspect, or is a first network device. The apparatus includes: a transceiver unit, configured to receive, in a first cell, a plurality of reference signal RS measurement results from a terminal device; and a processing unit, configured to determine an association relationship between a first RS measurement result and a first beam, where the transceiver unit is further configured to send the association relationship between the first RS measurement result and the first beam to the terminal device.

With reference to the tenth aspect, in some implementations of the tenth aspect, the transceiver unit is further configured to send handover indication information to the terminal device, where the handover indication information indicates the terminal device to hand over a serving cell from the first cell to a second cell.

According to an eleventh aspect, a measurement result transmission apparatus is provided. The apparatus is configured to implement a function of a terminal device according to the fifth aspect, or is a terminal device. The apparatus includes: a transceiver unit, used in a measurement result transmission apparatus. The apparatus is configured to implement a function of a terminal device according to the first aspect, or is a terminal device. The apparatus includes: a transceiver unit; and a processing unit, configured to: perform measurement in a first cell based on measurement configuration information, to obtain a CSI measurement result of a first neighboring cell, and hand over a serving cell from the first cell to a second cell, where the transceiver unit is further configured to send the CSI measurement result of the first neighboring cell to a second network device in the second cell.

With reference to the eleventh aspect, in some implementations of the eleventh aspect, the transceiver unit is further configured to receive handover indication information from a first network device, where the handover indication information indicates the terminal device to hand over the serving cell from the first cell to the second cell.

With reference to the eleventh aspect, in some implementations of the eleventh aspect, the transceiver unit is further configured to send, in the second cell, uplink indication information to the second network device, where the uplink indication information indicates a first beam, and the first beam is associated with the CSI measurement result of the first neighboring cell within valid duration.

According to a twelfth aspect, a measurement result transmission apparatus is provided. The apparatus is configured to implement a function of a first network according to the sixth aspect, or is a first network device. The apparatus includes: a processing unit, configured to determine measurement configuration information, where the measurement configuration information includes a CSI-RS resource; and a transceiver unit, configured to send the measurement configuration information to a terminal device.

With reference to the twelfth aspect, in some implementations of the twelfth aspect, the transceiver unit is further configured to send handover indication information to the terminal device, where the handover indication information indicates the terminal device to hand over a serving cell from a first cell to a second cell.

According to a thirteenth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any possible implementation of the first aspect to the sixth aspect through a logic circuit or by executing code instructions.

According to a fourteenth aspect, a computer-readable storage medium is provided. The computer-readable storage medium stores a computer program or instructions. When the computer program or the instructions are executed, the method according to any possible implementation of the first aspect to the sixth aspect is implemented.

According to a fifteenth aspect, a computer program product including instructions is provided. When the instructions are run, the method according to any possible implementation of the first aspect to the sixth aspect is implemented.

According to a sixteenth aspect, a computer program is provided. The computer program includes code or instructions. When the code or the instructions are run, the method according to any possible implementation of the first aspect to the sixth aspect is implemented.

According to a seventeenth aspect, a chip system is provided. The chip system includes a processor, and optionally, the chip system further includes a memory, configured to implement the method according to any possible implementation of the first aspect to the sixth aspect. The chip system includes a chip, or includes a chip and another discrete component.

According to an eighteenth aspect, a communication system is provided. The communication system includes a terminal device, a first network device, and a second network device.

The terminal device is configured to implement the method according to the implementations of the first aspect, the third aspect, or the fifth aspect, the first network device is configured to implement the method according to the implementations of the fourth aspect and some implementations of the second aspect, and the second network device is configured to implement the method according to the second aspect, the fourth aspect, or some implementations of the sixth aspect.

In a possible design, the communication system further includes another device that interacts with the terminal device, the first network device, or the second network device in the solution provided in embodiments of this application.

### BRIEF DESCRIPTION OF DRAWINGS

FIG. 1 is a diagram of an example of an architecture of a mobile communication system to which an embodiment of this application is applied;
FIG. 2 is a diagram of another example of an architecture of a mobile communication system to which an embodiment of this application is applied;
FIG. 3 is a schematic flowchart of a current neighboring cell handover method;
FIG. 4 is a schematic flowchart of a first measurement result transmission method according to this application;
FIG. 5 is a diagram of an example of inheritance of a first measurement result transmission method according to this application;
FIG. 6 is a schematic flowchart of a second measurement result transmission method according to this application;
FIG. 7 is a diagram of an example of inheritance of a second measurement result transmission method according to this application;
FIG. 8 is a schematic flowchart of a third measurement result transmission method according to this application;
FIG. 9 is a diagram of an example of a communication apparatus according to this application; and
FIG. 10 is a diagram of another example of a communication apparatus according to this application.

### DESCRIPTION OF EMBODIMENTS

The following describes technical solutions of this application with reference to accompanying drawings.

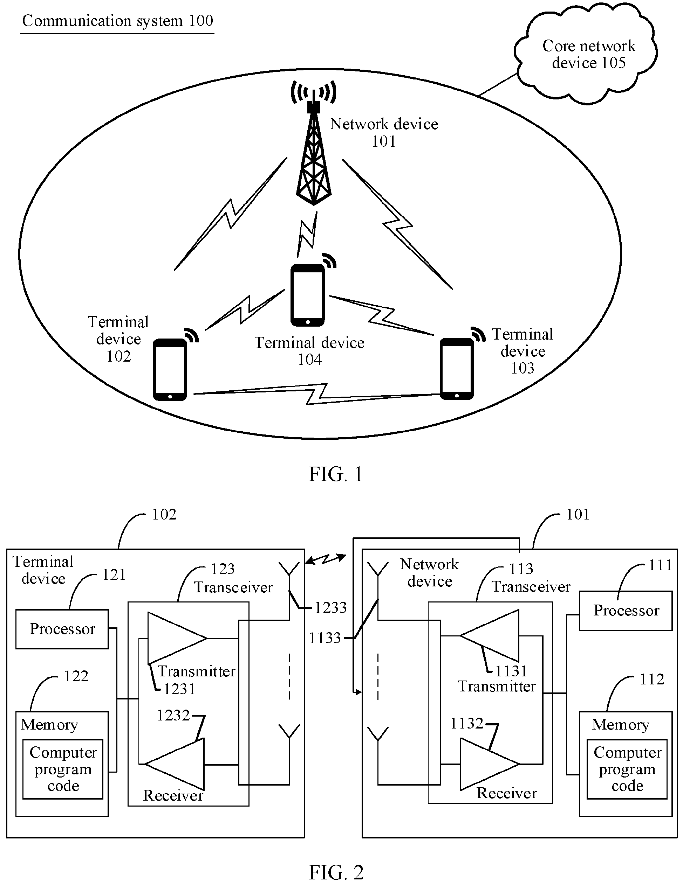

FIG. 1 is a diagram of an architecture of a mobile communication system to which an embodiment of this application is applied.

As shown in FIG. 1, the communication system 100 may include one or more network devices, for example, a network device 101 shown in FIG. 1. The communication system 100 may further include one or more terminal devices, for example, a terminal device 102, a terminal device 103, and a terminal device 104 shown in FIG. 1. The communication system 100 may support a sidelink (sidelink) communication technology, for example, sidelink communication between the terminal device 102 and the terminal device 103, and sidelink communication between the terminal device 102 and the terminal device 104.

It should be understood that FIG. 1 is merely a diagram. The communication system may further include another network device, for example, may further include a core network device 105, and a wireless relay device and a wireless backhaul device that are not shown in FIG. 1. A quantity of network devices and a quantity of terminal devices included in the mobile communication system are not limited in embodiments of this application.

The terminal device in embodiments of this application is a device having a wireless transceiver function, and may send a signal to the network device, or receive a signal from the network device. The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robot arm, a smart home device, customer-premises equipment (customer-premises equipment, CPE), or the like. A specific technology and a specific device form that are used by the terminal are not limited in embodiments of this application.

The network device in embodiments of this application may be a radio access device that is used by the terminal to access the communication system in a wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The CU herein completes functions of a radio resource control (radio resource control, RRC) protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to related technical specifications in the 3rd generation partnership project (3rd generation partnership project, 3GPP). The network device may be a macro base station, may be a micro base station or an indoor base station, or may be a relay node, a donor node, or the like. A specific technology and a specific device form that are used by the network device are not limited in embodiments of this application.

Embodiments of this application may be applied to downlink signal transmission, or may be applied to uplink signal transmission. For the downlink signal transmission, a sending device is a network device, and a corresponding receiving device is a terminal. For the uplink signal transmission, a sending device is a terminal, and a corresponding receiving device is a network device.

Communication between the network device and the terminal and between terminals may be performed through a licensed spectrum, or may be performed through an unlicensed spectrum, or may be performed through both a licensed spectrum and an unlicensed spectrum. Communication between the network device and the terminal and communication between the terminals may be performed through a spectrum below 6 gigahertz (gigahertz, GHz), a spectrum above 6 GHz, or both a spectrum below 6 GHz and a spectrum above 6 GHz. A spectrum resource used between the network device and the terminal is not limited in embodiments of this application.

In embodiments of this application, a function of the network device may alternatively be performed by a module (for example, a chip) in the network device, or may be performed by a control subsystem having the function of the network device. The control subsystem having the function of the network device herein may be a control center in the foregoing application scenarios such as a smart grid, industrial control, smart transportation, and a smart city. A function of the terminal may alternatively be performed by a module (for example, a chip or a modem) in the terminal, or may be performed by an apparatus having the function of the terminal.

Communication between the network device 101 and the terminal device 102 in the communication system shown in FIG. 1 may alternatively be represented in another form. As shown in FIG. 2, the terminal device 102 includes a processor 121, a memory 122, and a transceiver 123, and the transceiver 123 includes a transmitter 1231, a receiver 1232, and an antenna 1233. The network device 101 includes a processor 111, a memory 112, and a transceiver 113, and the transceiver 1103 includes a transmitter 1131, a receiver 1132, and an antenna 1133. The receiver 1132 may be configured to receive transmission control information through the antenna 1133, and the transmitter 1231 may be configured to send transmission feedback information to the network device 101 through the antenna 1133. The transmitter 1131 may be configured to send the transmission control information to the terminal device 102 through the antenna 1133, and the receiver 1132 may be configured to receive, through the antenna 1133, the transmission feedback information sent by the terminal device 102.

To better describe implementations of this application, concepts related to embodiments of this application are first described before embodiments of this application are described.

### 1. Beam (beam)

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent through different beams. Optionally, a plurality of beams having a same or similar communication feature may be considered as one beam. One beam may include one or more antenna ports, configured to transmit a data channel, a control channel, a sounding signal, and the like. For example, a transmission beam may be distribution of signal strength formed in different directions in space after a signal is transmitted through an antenna, and a reception beam may be distribution of signal strength, in different directions in space, of a radio signal received from an antenna. It may be understood that the one or more antenna ports forming one beam may also be considered as one antenna port set.

A beam used for receiving a signal may be referred to as a reception beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). An uplink transmission beam may be indicated by any one of a spatial relationship, a TCI-state, or a sounding reference signal (sounding reference signal, SRS) resource (indicating a transmission beam that uses the SRS). Therefore, the uplink transmission beam may alternatively be replaced with the SRS resource.

A beam used for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

When a low-frequency band or an intermediate-frequency band is used, a signal may be sent omnidirectionally or at a wide angle. When a high-frequency band is used, because of a small carrier wavelength of a high-frequency communication system, an antenna array formed by a plurality of antenna elements may be disposed at a transmission end and a reception end. The transmission end sends a signal by using a specific beamforming weight, to enable the sent signal to form a spatially directional beam, and the reception end receives the signal through the antenna array by using a specific beamforming weight, so that received power of the signal at the reception end can be increased, and a path loss can be avoided.

### 2. Quasi-co-location (quasi-co-location, QCL)

A co-location relationship indicates that a plurality of resources have one or more same or similar communication features. For the plurality of resources that have the co-location relationship, same or similar communication configurations may be used. For example, if two antenna ports have a quasi-co-location relationship, a large-scale channel characteristic of transmitting one symbol by one port may be deduced from a large-scale channel characteristic of transmitting one symbol by the other port. The large-scale characteristic may include: a delay spread, an average delay, a Doppler spread, a Doppler frequency shift, an average gain, a reception parameter, a reception beam number of the terminal device, a transmission/reception channel correlation, a reception angle of arrival, a spatial correlation of a receiver antenna, a dominant angle of arrival (angle of arrival, AoA), an average angle of arrival, an AoA spread, and the like. Specifically, that a co-location indication indicates whether at least two groups of antenna ports have a co-location relationship is that the co-location indication indicates whether channel state information-reference signals sent by the at least two groups of antenna ports are from a same transmission point, or the co-location indication indicates whether channel state information-reference signals sent by the at least two groups of antenna ports are from a same beam group.

### 3. Reference signal (Reference Signal)

According to an LTE and/or NR protocol, uplink communication at a physical layer includes transmission of physical uplink channels and transmission of uplink signals. The physical uplink channel includes a physical random access channel (physical random access channel, PRACH), an uplink control channel (physical uplink control channel, PUCCH), an uplink data channel (physical uplink shared channel, PUSCH), and the like. The uplink signal includes a sounding reference signal (sounding reference signal, SRS), an uplink control channel demodulation reference signal (PUCCH de-modulation reference signal, PUCCH-DMRS), an uplink data channel demodulation reference signal PUSCH-DMRS, an uplink phase noise tracking signal (phase noise tracking reference signal, PTRS), an uplink positioning signal (uplink positioning RS), and the like. Downlink communication includes transmission of physical downlink channels and transmission of downlink signals. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel state information-reference signal (channel status information reference signal, CSI-RS), a cell signal (Cell reference signal, CRS) (not available in NR), a fine synchronization signal (time/frequency tracking reference signal, TRS) (not available in LTE), an LTE and/or NR positioning signal (positioning RS), and the like.

### 4. Transmission configuration indication (transmission configuration indication, TCI)

A higher layer in a protocol configures QCL by using a TCI-State. A parameter of the TCI-State is used to configure a quasi-co-location relationship between one or two downlink reference signals and a PDSCH-DMRS. The TCI is a transmission configuration indicator, and is a field indicating quasi-co-location of a PDSCH antenna port in DCI. The TCI is configured by RRC, and is referred to as a TCI-state in configuration signaling. After the RRC configuration, the base station sends a MAC-CE to activate one or more TCI states. The base station may further send DCI to indicate one of the plurality of activated TCIs. The TCI includes one or two QCL relationships. The QCL represents a consistency relationship between a signal/channel to be received currently and a previously known reference signal. If there is a QCL relationship, UE may inherit a reception or transmission parameter used for previously receiving a reference signal, to receive or send a to-be-arrived signal/channel. If the TCI state includes information indicating that an identifier is QCL Type-D, the TCI may indicate a beam. QCL Type-A/B/C indicates information such as a time domain offset and a frequency domain offset, and does not include spatial domain information. The QCL Type-A/B/C is usually used to assist the terminal in data receiving and demodulation.

The following describes the configuration, activation, and indication of the TCI state.

TCI state configuration: The network device configures a plurality of TCI states for the terminal device by using RRC signaling. Each of these TCI states includes one piece of QCL-Info whose type is TypeD. Alternatively, the network device may configure a TCI-state that does not include QCL-info whose type is TypeD. However, these TCI states do not indicate a data transmission beam. Therefore, details are not further described herein.

TCI state activation: After configuring the plurality of TCI states, the network device further needs to activate eight TCI states in the plurality of TCI states by using the MAC-CE. The eight TCI states are in one-to-one correspondence with eight values of the TCI field in the DCI. In other words, specific eight TCI states corresponding to the eight values of the TCI field in the DCI are determined by using the MAC CE.

TCI state indication: The network device indicates a specific TCI-state by using the TCI field in the DCI. For example, a value of the TCI field in the DCI sent by the network device to the terminal device is 000, indicating that a TCI state corresponding to 000 is used for the data transmission beam. A reference signal included in the QCL-Info whose type is TypeD in the TCI state is a channel state information-reference signal (channel state information-reference signal, CSI-RS) whose index is #1, indicating that a beam used for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data through the corresponding beam.

5. Common beam: Currently, each channel is indicated through an independent beam. Each channel has a corresponding beam. In this application, a common beam is defined, and is used for a plurality of uplink and/or downlink channels.

The common beam is a same beam used for a plurality of channels, a plurality of types of channels, a plurality of reference signals, and/or a plurality of types of reference signals. The channel includes but is not limited to at least one of a PDCCH, a PDSCH, a PUCCH, a PUSCH, and a PRACH. The reference signal includes but is not limited to at least one of an SSB, a CSI-RS, a DMRS, a PTRS, a TRS, an SRS, and the like.

A joint (joint) common beam is for transmission of at least one uplink and downlink channel or at least one uplink and downlink reference signal, for example, a PDCCH, a PDSCH, a PUCCH, and a PUSCH. The joint common beam may also be referred to as an uplink and downlink common beam.

An uplink common beam is for transmission of a plurality of uplink channels, and/or transmission of a plurality of types of uplink channels, and/or transmission of one or more uplink reference signals, for example, a PUCCH, a PUSCH, and an SRS.

A downlink common beam is for transmission of a plurality of downlink channels, and/or transmission of a plurality of types of downlink channels, and/or transmission of one or more downlink reference signals, for example, a PDCCH, a PDSCH, and a CSI-RS.

Form of the common beam: The common beam may have a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (such as a path loss measurement reference signal resource, p0, or a closed loop index (closed Loop Index)), and an identifier of a path loss reference signal.

Application scope of the common beam: The common beam may be cell-specific, that is, one common beam is for transmission of a plurality of channels in one cell. The common beam may be bandwidth part (bandwidth part, BWP)-specific, and is for transmission of a plurality of beams in one BWP. The common beam may also be crosscell, that is, is for transmission of a plurality of channels of a plurality of cells. The plurality of cells may be a plurality of cells in one band (band). The plurality of cells may also be a plurality of inter-band cells.

In this application, unless otherwise specified, the beam may be a common beam, or may be a downlink beam and/or an uplink beam. The beam may be indicated by a TCI state or an RS.

It should be understood that in this application, the network device may send different measurement configurations to the terminal device, to indicate the terminal to perform measurement based on the different measurement configurations to obtain different measurement results. For example, in comparison with CSI-RS measurement, a CSI-RS resource for CSI measurement has more ports (for example, an 8-port MIMO channel is measured).

It should be further understood that, in this application, the measurement configurations sent by the network device to the terminal device may be associated with different reporting configurations. For example, a part of reporting configurations indicate to measure and report RSRP, and the other part of reporting configurations indicate to measure and report CQI.

It should be noted that the two description manners, namely, the TCI-state and the TCI state, in this specification may be interchanged.

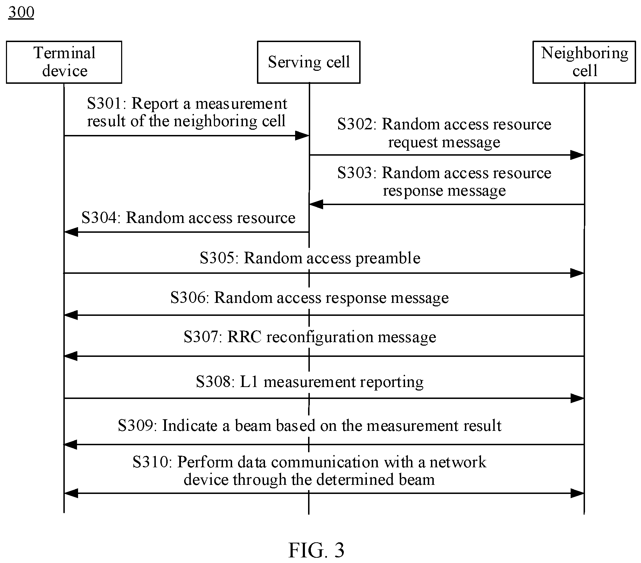

FIG. 3 is a schematic flowchart of a current neighboring cell handover method. In a current technology, before performing handover, a terminal may measure an SSB signal of a neighboring cell, and report a measurement result. A serving cell (serving cell) requests a random access resource from the neighboring cell (neighboring cell) based on the measurement result reported by the terminal. After handover is performed, the random access resource is used by the terminal to initiate random access in a target neighboring cell, establish uplink synchronization, and obtain uplink timing. A specific process may be as follows:
S301: The terminal reports the measurement result of the neighboring cell to the serving cell.
S302: The serving cell sends a random access resource request message to the neighboring cell.
S303: The neighboring cell sends a random access resource response message to the serving cell.
S304: The serving cell sends the random access resource of the neighboring cell to the terminal.
S305: The terminal sends a random access preamble to the neighboring cell.
S306: The neighboring cell sends a random access response message to the terminal.
S307: The neighboring cell sends an RRC reconfiguration message to the terminal.

The RRC reconfiguration message includes an L1 measurement resource, and the measurement resource is used by the terminal to perform beam training.

S308: The terminal performs L1 measurement reporting.

A process in which the terminal performs L1 measurement reporting in the neighboring cell after the terminal performs cell handover (hands over from the serving cell to the neighboring cell) may be referred to as a beam training process. The process may specifically include the following three phases:
Phase 1: The terminal fixes a reception beam, receives a wide beam scanned and sent by a network device, and determines a downlink wide beam with good signal quality (for example, maximum RSRP).
Phase 2: The network device performs scanning through a plurality of narrow beams in a range of a wide beam with optimal quality of the terminal. The terminal determines a downlink narrow beam with good quality.
Phase 3: The network device fixes the downlink narrow beam to send a reference signal, and the terminal performs receiving and scanning through different narrow beams, to determine a good reception beam.

In addition, after determining the beam, the network device usually further needs the terminal to perform channel measurement on the beam, to obtain channel information. The network device determines a precoding scheme based on the channel information, to obtain a spatial multiplexing gain of a multiple-input multiple-output (multiple-input multiple-output, MIMO) system. In a protocol, the neighboring cell indicates the terminal to trigger CSI (channel state information) measurement reporting. The terminal performs measurement for a period of time (the terminal needs to measure a multi-port reference signal, and obtain feedback content based on processing and calculation), and then reports a measurement result.

S309: The neighboring cell indicates the beam based on the measurement result.

S310: The terminal performs data communication with the network device in the neighboring cell through the determined beam.

It can be learned from the foregoing that, in the current technology, after the terminal performs cell handover, the terminal needs to perform beam training and channel information obtaining again in the cell after the handover. Consequently, long data transmission interruption time of the terminal may be caused, and user experience is poor.

Based on this, this application provides a measurement result transmission method and an apparatus, to expect to reduce a delay of restoring data transmission after the terminal hands over to a new cell, and improve user experience.

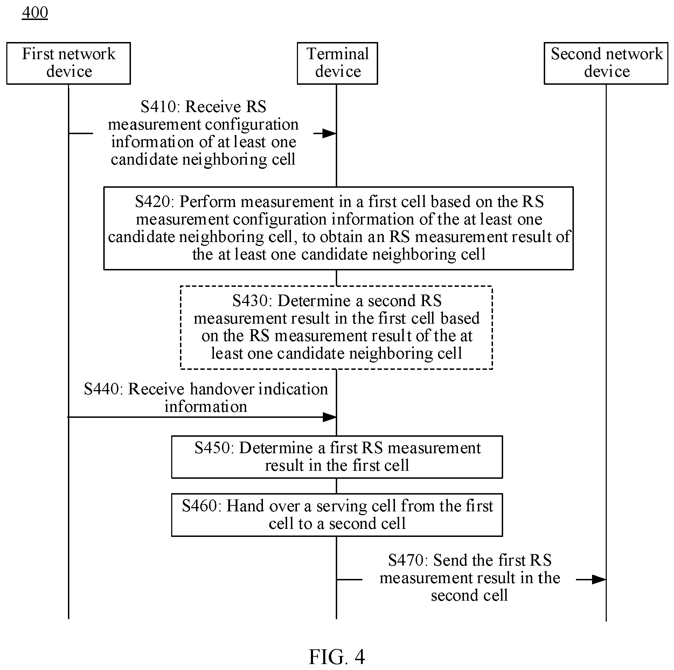

FIG. 4 is a schematic flowchart of a first measurement result transmission method according to this application. In this embodiment, after a terminal device hands over a serving cell, the terminal device does not need to perform beam training, and may directly inherit a measurement result of a neighboring cell beam before the handover. A first network device is located in a first cell, a second network device is located in a second cell, a serving cell (also referred to as a current serving cell) before the terminal device performs cell handover is the first cell, and a serving cell after the terminal device performs cell handover is the second cell. The terminal device may be any one of the terminal device 102, the terminal device 103, or the terminal device 104 shown in FIG. 1. The first network device may be the network device 101 shown in FIG. 1. The second network device may be a network device not shown in FIG. 1, for example, a network device 106.

S410: The terminal device receives RS measurement configuration information of at least one candidate neighboring cell from the first network device.

Correspondingly, the first network device sends the RS measurement configuration information of the at least one candidate neighboring cell to the terminal device.

The at least one candidate neighboring cell is relative to the current serving cell of the terminal device, namely, the first cell in which the first network device is located.

Optionally, the at least one candidate neighboring cell includes the serving cell after the terminal device performs cell handover, for example, the second cell.

The RS measurement configuration information of the at least one candidate neighboring cell includes one or more of the following: an index of a synchronization signal block SSB associated with an RS of the at least one candidate neighboring cell, a power offset of an RS of the at least one candidate neighboring cell relative to an SSB of the at least one candidate neighboring cell, a scrambling identifier of an RS of the at least one candidate neighboring cell, a bandwidth of an RS of the at least one candidate neighboring cell, a frequency domain position of an RS of the at least one candidate neighboring cell, or a time domain position of an RS of the at least one candidate neighboring cell. Optionally, the RS measurement configuration information of the at least one candidate neighboring cell may further include other information related to the RS measurement configuration information. For example, any RS measurement resource may be associated with a cell identifier of a neighboring cell, or an RS resource belongs to a part of preconfigured neighboring cell configuration information.

S420: The terminal device performs measurement in the first cell based on the RS measurement configuration information of the at least one candidate neighboring cell, to obtain an RS measurement result of the at least one candidate neighboring cell.

For a specific process in which the terminal device performs measurement in the current serving cell based on the RS measurement configuration information of the candidate neighboring cell, to obtain the RS measurement result of the candidate neighboring cell, refer to the current technology. Details are not described herein again.

Optionally, that the terminal device performs measurement in the first cell based on the RS measurement configuration information of the at least one candidate neighboring cell, to obtain an RS measurement result of the at least one candidate neighboring cell includes: The terminal device performs measurement in the first cell based on the RS measurement configuration information of the at least one candidate neighboring cell within valid duration of the RS measurement configuration information of the at least one candidate neighboring cell, to obtain the RS measurement result of the at least one candidate neighboring cell. A start moment of the valid duration of the RS measurement configuration information of the at least one candidate neighboring cell is a moment at which the RS measurement configuration information of the at least one candidate neighboring cell is received; and an end moment of the valid duration of the RS measurement configuration information of the at least one candidate neighboring cell is an X^{th} slot after the RS measurement configuration information of the at least one candidate neighboring cell is received, and X is a positive integer; or an end moment of the valid duration of the RS measurement configuration information of the at least one candidate neighboring cell is a Y^{th} millisecond after the RS measurement configuration information of the at least one candidate neighboring cell is received, and Y is a positive integer; or an end moment of the valid duration of the RS measurement configuration information of the at least one candidate neighboring cell is a moment at which reconfigured RS measurement configuration information of the at least one candidate neighboring cell is received.

S430: The terminal device determines a second RS measurement result in the first cell based on the RS measurement result of the at least one candidate neighboring cell.

This step is an optional step. The second RS measurement result is a subset of the RS measurement result of the at least one candidate neighboring cell. Because the subset includes a proper subset and a full set, in other words, when the second RS measurement result is a proper subset of the RS measurement result of the at least one candidate neighboring cell, the second RS measurement result includes a part of measurement results in the RS measurement result of the at least one candidate neighboring cell; or when the second RS measurement result is a full set of the RS measurement result of the at least one candidate neighboring cell, the second RS measurement result includes all measurement results in the RS measurement result of the at least one candidate neighboring cell.

Optionally, that the terminal device determines a second RS measurement result includes: The terminal device determines, based on capability information of the terminal device, a quantity of cells associated with the second RS measurement result; or the terminal device determines, based on preconfigured information (for example, a protocol specification or a local configuration), a quantity of cells associated with the second RS measurement result.

Optionally, the second RS measurement result is one or more RS measurement results that are in the RS measurement result of the at least one candidate neighboring cell and that are greater than a first threshold, and the first threshold is a preset value; or the second RS measurement result is first N RS measurement results that are in the RS measurement result of the at least one candidate neighboring cell and whose quality values are sorted in descending order, and N is a positive integer. The first threshold and a specific value of N may be configured by the first network device for the terminal device by using measurement configuration information, handover indication information, or configuration information carried in other radio resource control RRC, or indicated to the terminal device by using indication information carried in a MAC CE.

Optionally, the terminal device stores the second RS measurement result within valid duration of the second RS measurement result. A start moment of the valid duration of the second RS measurement result is a moment at which the serving cell of the terminal device is handed over from the first cell to the second cell, or a moment at which the terminal device obtains the second RS measurement result, or a moment at which the terminal device reports the first RS measurement result in the first cell; and an end moment of the valid duration of the second RS measurement result is a K^{th} slot after the second RS measurement result is obtained, and K is a positive integer; or an end moment of the valid duration of the second RS measurement result is an L^{th} millisecond after the second RS measurement result is obtained, and L is a positive integer; or an end moment of the valid duration of the second RS measurement result is a moment at which RS measurement is performed again.

S440: The terminal device receives the handover indication information from the first network device. Correspondingly, the first network device sends the handover indication information to the terminal device.

The handover indication information indicates the terminal device to hand over the serving cell from the first cell to the second cell. Optionally, the handover indication information may include an identifier ID of the second cell or an ID of another cell, and is used by the terminal device to identify the second cell, and is further used by the terminal device to finally determine a first RS measurement result based on the cell ID.

S450: The terminal device determines the first RS measurement result in the first cell.

There may be two manners in which the terminal device determines the first RS measurement result in the first cell. In one possible implementation, after step S430 is performed, the terminal device determines the first RS measurement result based on the second RS measurement result and the handover indication information, and the first RS measurement result is a subset of the second RS measurement result, in other words, the first RS measurement result includes a part or all of the second RS measurement result. In the other possible implementation, when step S430 is not performed, the terminal device may determine the first RS measurement result based on RS measurement results of a plurality of neighboring cells and the handover indication information, and the first RS measurement result is a subset of the RS measurement results of the plurality of neighboring cells, in other words, the first RS measurement result includes a part or all of the RS measurement results of the plurality of neighboring cells.

Optionally, the terminal device stores the first RS measurement result within valid duration of the first RS measurement result. A start moment of the valid duration of the first RS measurement result is a moment at which the serving cell of the terminal device is handed over from the first cell to the second cell, or a moment at which the terminal device obtains the first RS measurement result; and an end moment of the valid duration of the first RS measurement result is an M^{th} slot after the first RS measurement result is obtained, and M is a positive integer; or an end moment of the valid duration of the first RS measurement result is an N^{th} millisecond after the first RS measurement result is obtained, and N is a positive integer; or an end moment of the valid duration of the first RS measurement result is a moment at which RS measurement is performed again.

Optionally, the valid duration of the first RS measurement result and the valid duration of the second RS measurement result may be the same or may be different.

S460: The terminal device hands over the serving cell from the first cell to the second cell.

For handover of the serving cell performed by the terminal device based on the handover indication information, refer to the current technology. Details are not described herein again.

Optionally, that the terminal device hands over the serving cell from the first cell to the second cell may also be represented as that the terminal device hands over from the first cell to the second cell.

S470: The terminal device sends the first RS measurement result to the second network device in the second cell.

Correspondingly, the second network device receives, in the second cell, the first RS measurement result from the terminal device.

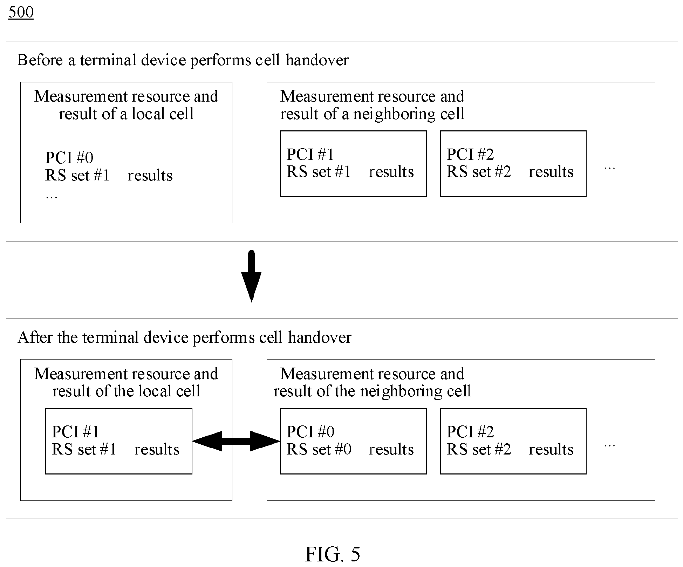

As shown in FIG. 5, for example, in this embodiment, before the terminal device hands over the serving cell (hands over from the first cell to the second cell), a measurement resource and a measurement result of a local cell (the first cell) may be PCI#0 RS set#0 results, and a measurement resource and a measurement result of the neighboring cell may be PCI#1 RS set#1 results, PCI#2 RS set#2 results, and the like. After the terminal device hands over the serving cell (hands over from the first cell to the second cell), a measurement resource and a measurement result of a local cell (the second cell) may be PCI#1 RS set#1 results, and a measurement resource and a measurement result of the neighboring cell may be PCI#0 RS set#0 results, PCI#2 RS set#2 results, and the like. In this way, after the serving cell is handed over, there is no need to measure the current serving cell, namely, the neighboring cell before the handover, again, and a measurement result of the neighboring cell beam before the handover, for example, a measurement result PCI#1 RS set#1 results, may be directly inherited.

It should be noted that the foregoing describes the technical solutions of this application by using an example in which the measurement result is the RS measurement result. The RS may include a channel state information-reference signal CSI-RS. However, a person skilled in the art may know that the measurement result may also be an SSB. In other words, the foregoing method may also be performed based on an SSB measurement result of the neighboring cell. After the serving cell is handed over, the current serving cell, namely, the neighboring cell before the handover, does not need to be measured again, and an SSB measurement result of the neighboring cell beam before the handover may be directly inherited.

According to the technical solution of this application, after the terminal device hands over the serving cell, the terminal device does not need to measure the current serving cell, namely, the neighboring cell before the handover, again, and directly inherits a measurement result of the neighboring cell beam before the handover. This helps reduce a communication delay, and improve user experience.

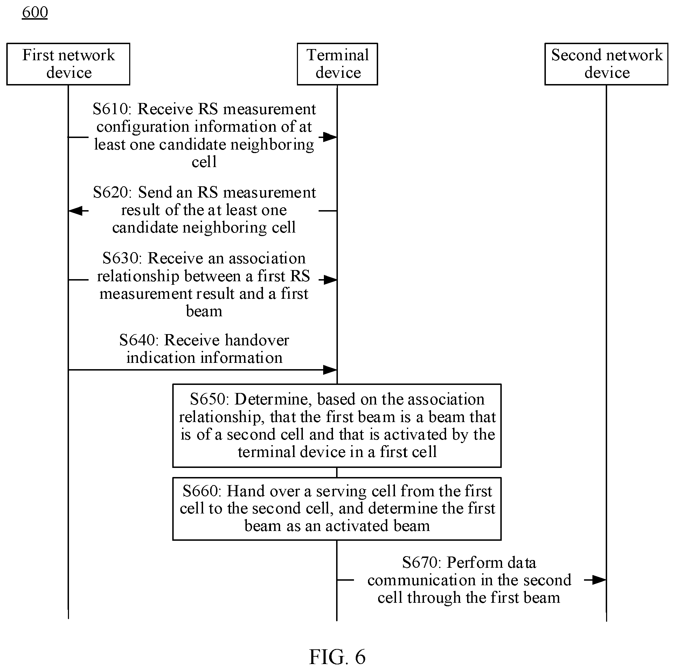

FIG. 6 is a schematic flowchart of a second measurement result transmission method according to this application. In this embodiment, a first network device preconfigures a neighboring cell beam, so that a terminal device can measure a corresponding reference signal before performing cell handover, and can track an activated beam of a target cell in advance. The first network device is located in a first cell, a second network device is located in a second cell, a serving cell (also referred to as a current serving cell) before the terminal device performs cell handover is the first cell, and a serving cell after the terminal device performs cell handover is the second cell. The terminal device may be any one of the terminal device 102, the terminal device 103, or the terminal device 104 shown in FIG. 1. The first network device may be the network device 101 shown in FIG. 1. The second network device may be a network device not shown in FIG. 1, for example, a network device 106.

S610: The terminal device receives RS measurement configuration information of at least one candidate neighboring cell from the first network device.

Correspondingly, the first network device sends the RS measurement configuration information of the at least one candidate neighboring cell to the terminal device.

An RS may specifically include a channel state information-reference signal CSI-RS.

For a specific process of this step, refer to step 410 in FIG. 4. Details are not described herein again.

S620: The terminal device sends an RS measurement result of the at least one candidate neighboring cell to the first network device.

Correspondingly, the first network device receives the RS measurement result of the at least one candidate neighboring cell from the terminal device.

Before sending the RS measurement result of the at least one candidate neighboring cell to the first network device, the terminal device may perform measurement in a current serving cell (the first cell) based on the RS measurement configuration information of the at least one candidate neighboring cell to obtain the RS measurement result of the candidate neighboring cell. For a specific process, refer to step S420 in FIG. 4. Details are not described herein again.

S630: The terminal device receives an association relationship, between a first RS measurement result and a first beam, from the first network device.

Correspondingly, the first network device determines and sends the association relationship between the first RS measurement result and the first beam to the terminal device.

The first beam may be one or more beams. The first network device may screen the plurality of RS measurement results to obtain the first RS measurement result, and associates the first RS measurement result with a beam of a cell after the terminal device performs handover in the future. The first RS measurement result is a part or all of the plurality of RS measurement results. For example, a cell associated with the first RS measurement result may be one or more cells with good quality of service, or a cell associated with the first RS measurement result may be a cell whose quality of service is greater than a specific threshold.

Optionally, the first beam may be a transmission configuration indication TCI, a synchronization signal block SSB, or an RS. When a capability requirement of the terminal device is not changed, the first network device may use N of existing maximum eight TCIs that can be activated to activate a beam TCI of the neighboring cell. Each TCI corresponds to one neighboring cell, or a plurality of TCIs correspond to one neighboring cell. Optionally, the beam of the neighboring cell may be a TRS reception beam of a potential neighboring cell. Alternatively, the first network device may separately configure a pre-activated TCI list (TCI state list) for the terminal device, to track a TRS beam of the neighboring cell. Alternatively, the first network device may perform screening based on a neighboring cell TCI measured and reported by the terminal device, to determine to configure a specific TCI for the terminal device.

Optionally, the first network device may alternatively send indication information to the terminal device, where the indication information indicates an activated beam after the terminal device performs cell handover.

Optionally, the first network device may alternatively not send an association relationship or indication information to the terminal device, and directly activate, for the terminal device, an activated beam after the terminal device performs cell handover. In other words, the first network device directly sends TCI state configuration information of the neighboring cell to the terminal device. For example, the first network device sends activation signaling to the terminal device based on the measurement result received from the terminal device, where the activation signaling is used to activate a beam or a TCI state of the second cell (a cell after cell handover is performed) when the terminal device performs communication in the first cell (a cell before cell handover is performed). The activation signaling may include an identifier of the target cell and an identifier of the activated TCI of the activated beam, and the identifier of the activated TCI is an identifier, of the TCI state, configured for the target cell.

Optionally, after performing cell handover, the terminal device maintains an activated TCI state of the second cell. Optionally, the terminal reports the activated TCI state to the second network device in the second cell. For example, the terminal may report at least one activated TCI state in ascending order of code points, or explicitly report a code point and the TCI state associated with the code point. Before reporting the activated TCI state, the terminal device may further send a scheduling request message to the second network device, where the scheduling request message is used to request an uplink resource for reporting the activated TCI state. Optionally, the first network device may indicate, to the second network device by using higher layer signaling (including but not limited to F1-AP signaling and Xn interface signaling), the activated TCI state of the second cell of the terminal device.

S640: The terminal device receives the handover indication information from the first network device.

Correspondingly, the first network device sends the handover indication information to the terminal device.

The handover indication information may include the first beam.

For a specific process of this step, refer to step 440 in FIG. 4. Details are not described herein again.

S650: The terminal device determines, based on the association relationship, that the first beam is a beam that is of the second cell and that is activated by the terminal device in the first cell.

S660: The terminal device hands over the serving cell from the first cell to the second cell, and determines the first beam as the activated beam.

That the terminal device determines the first beam as the activated beam after performing cell handover may also be explained as that the terminal device deletes an original activated TCI state list, and replaces the original activated TCI state list with the pre-activated first beam (or the TCI). Optionally, the first beam includes a beam indicated by the handover indication information, and the beam indicated by the handover indication may be used as a unified TCI (unified TCI). After the beam indicated by the handover indication information is used as the activated beam, the beam may be activated and mapped to a minimum code point 000, or may be directly used as a common beam for communication in a new cell after the handover. When the first beam includes a plurality of measured beams, the plurality of beams are activated by default, and code point (code point) mapping of the plurality of beams may be performed in a reporting sequence of L1 or in a sequence indicated in the handover indication information.

Optionally, the activated beam includes at least one of the following: a code point associated with an activated TCI state; and after receiving a beam indication to activate the beam for specific duration, the terminal device can receive or send data based on the indicated beam; or the terminal device includes, in a measurement report, a measurement result of a reference signal associated with the TCI state.

Determining the first beam as the activated beam may specifically include associating the code point with the first beam. For example, if the first beam is associated with a code point "000", the second network device may further send DCI (downlink control information) signaling in the second cell, where the DCI signaling indicates a value "000" of a bit field of the beam, that is, indicates that a reception beam or a transmission beam of the terminal is determined as the first beam. After a beam indication takes effect, the terminal may receive a downlink signal or channel based on the first beam, or send an uplink signal or channel based on the first beam.

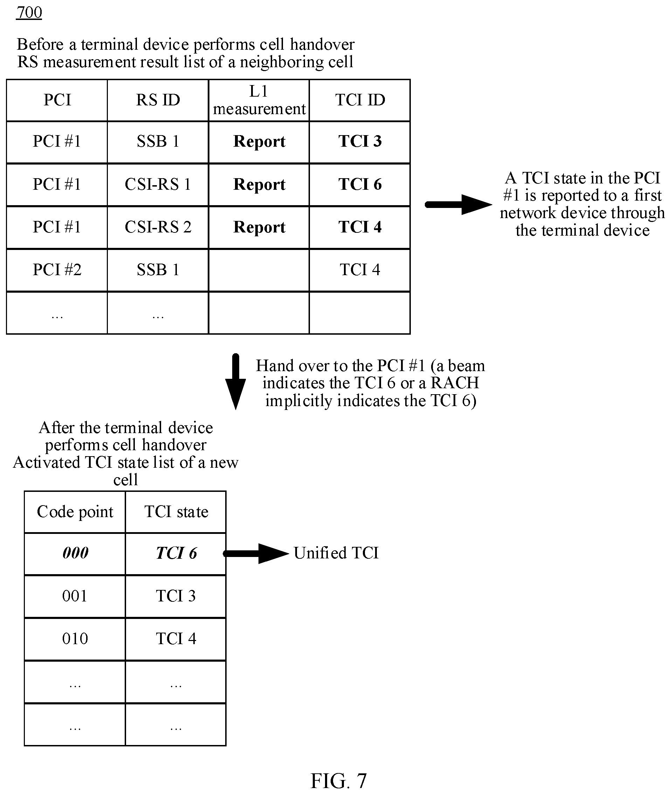

As shown in FIG. 7, for example, in this embodiment, the neighboring cell RS measurement result obtained by the terminal device by performing measurement in the first cell may include measurement results in which the reference signal is associated with physical cell identifiers PCI #1 and PCI #2. In a possible implementation, the terminal device may be associated with a pre-activated TCI state of the PCI #1 and report the pre-activated TCI state to the first network device, so that the first network device may learn that the terminal device activates the TCI state associated with the PCI #1 cell, and the TCI state includes a TCI 6. In another possible implementation, the terminal device may report, to the first cell, one or more measurement results associated with the PCI #1, and the one or more measurement results include the first RS measurement result. The terminal device may determine, based on the preconfiguration information, a TCI state associated with one or more reference signals whose measurement results are reported, and the TCI state is a TCI state of the second cell. The terminal device determines, based on the reported measurement result, that the at least one associated TCI is an activated TCI state. In addition, the serving cell (the network device in the serving cell) determines a currently activated TCI state of the neighboring cell of the terminal device based on an association relationship, between a reference signal and a TCI state of the neighboring cell, that is included in the preconfiguration information sent to the terminal device and a measurement result that is of the reference signal of the neighboring cell and that is reported by the terminal device, and the TCI state includes the TCI 6.

The terminal device may further determine a code point corresponding to the activated TCI state of the neighboring cell. In a possible method, TCI states corresponding to reference signals whose reference signal quality of measurement results is sorted in descending order are mapped to code points in ascending order based on the reported measurement result of the reference signal of the neighboring cell. The method may further include: The terminal device maps the TCI state indicated in the handover indication information to a TCI state with a smallest code point. For example, if the serving cell (the network device in the serving cell) indicates the TCI 6 to the terminal device by using a handover command, the terminal device associates the TCI 6 with the code point 000, and other code points sorted in ascending order are associated with TCI states corresponding to reference signals whose measurement results are sorted in descending order. In this way, after performing cell handover, the terminal device may perform communication in the new cell through the beam indicated by the TCI 6. This reduces the delay required for reconfiguring and activating the TCI state of the new cell after the handover.

S670: The terminal device performs data communication with the second network device in the second cell through the first beam.

Correspondingly, the second network device performs data communication with the terminal device in the second cell through the first beam.

According to the technical solution of this application, a neighboring cell beam is preconfigured, so that the terminal device can measure a corresponding reference signal before performing cell handover, and can track an activated beam of a target cell in advance; and after cell handover, a beam indication delay is reduced.

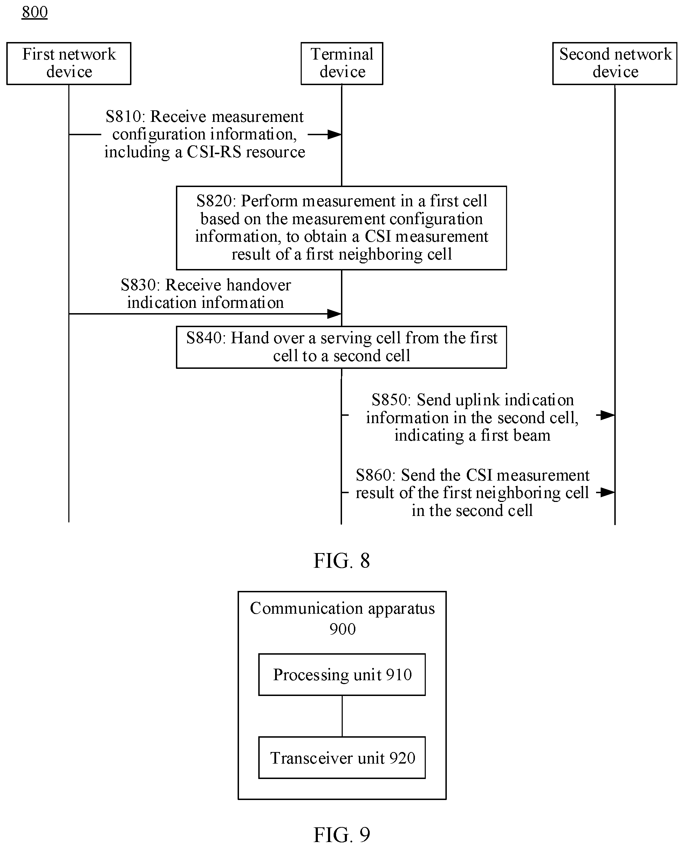

FIG. 8 is a schematic flowchart of a third measurement result transmission method according to this application. In this embodiment, the first network device configures a measurement resource and a relationship between the measurement resource and a neighboring cell, so that a terminal device can determine, before performing cell handover, a beam on which a CSI of the neighboring cell needs to be measured. The terminal device measures a CSI-RS of the neighboring cell based on measurement configuration information, and determines channel state information corresponding to the CSI-RS. The channel state information includes a transmission order (rank indication, RI), a precoding matrix (precoding matrix indicator, PMI), downlink channel quality information (channel quality indicator, CQI), and the like. The first network device is located in a first cell, a second network device is located in a second cell, a serving cell (also referred to as a current serving cell) before the terminal device performs cell handover is the first cell, and a serving cell after the terminal device performs cell handover is the second cell. The terminal device may be any one of the terminal device 102, the terminal device 103, or the terminal device 104 shown in FIG. 1. The first network device may be the network device 101 shown in FIG. 1. The second network device may be a network device not shown in FIG. 1, for example, a network device 106.

S810: The terminal device receives measurement configuration information from the first network device.

Correspondingly, the first network device sends the measurement configuration information to the terminal device.

The measurement configuration information includes at least one CSI-RS resource, and the CSI-RS resource is associated with a first neighboring cell. The configuration information includes a plurality of CSI-RS resources, the first neighboring cell includes one or more neighboring cells, and that the CSI-RS resource is associated with the first neighboring cell may be explained as that one CSI-RS resource corresponds to one neighboring cell, or a plurality of CSI-RS resources correspond to one neighboring cell.

Optionally, the configuration information further includes one or more of a transmission configuration indication TCI state, quasi-co-location QCL information, or reference signal information used for reference. The TCI state information, the quasi-co-location QCL information, and the reference signal information used for reference are all associated with the first neighboring cell. That the TCI state information is associated with the first neighboring cell may be explained as that one piece of TCI state information corresponds to one neighboring cell, or a plurality of pieces of TCI state information correspond to a plurality of neighboring cells; that the QCL information is associated with the first neighboring cell may be explained as that one piece of QCL information corresponds to one neighboring cell, or a plurality of pieces of QCL information correspond to a plurality of neighboring cells; and that the reference signal information used for reference is associated with the first neighboring cell may be explained as that one piece of reference signal information used for reference corresponds to one neighboring cell, or a plurality of pieces of reference signal information used for reference correspond to a plurality of neighboring cells. The reference signal information used for reference may be received as follows: The terminal device determines, based on a spatial filter used to receive or send a specific reference signal, a spatial filter used to receive or send another signal or other data.

S820: The terminal device performs measurement in the first cell based on the measurement configuration information, to obtain CSI measurement information of the first neighboring cell.

Optionally, a CSI measurement result of the first neighboring cell includes N CSI measurement results, N is a maximum quantity, of pieces of CSI that can be measured, that is preconfigured or reported by the terminal device, and N is a positive integer. In other words, a quantity of measurement results included in the CSI measurement result of the first neighboring cell needs to be less than or equal to a quantity preconfigured for the terminal device, or less than or equal to a maximum quantity that can be measured and that is reported by the terminal device.

Optionally, the CSI measurement result of the first neighboring cell includes CSI measurement results corresponding to first M reference signals RSs on which the terminal device performs L1 or L3 reporting and whose reference signal received power RSRP values are sorted in descending order; or the CSI measurement result of the first neighboring cell includes first M best measurement results (for example, RSRP values) in measurement results last reported by the terminal device; or the network device explicitly configures first M best measurement results (for example, RSRP values) in a specific measurement resource set. M is a positive integer.

Optionally, a start moment of valid duration of the CSI measurement result of the first neighboring cell is a moment at which the CSI measurement result of the first neighboring cell is obtained; and an end moment of the valid duration of the CSI measurement result of the first neighboring cell is an X^{th} slot after the CSI measurement result of the first neighboring cell is obtained, and X is a positive integer; or an end moment of the valid duration of the CSI measurement result of the first neighboring cell is a Y^{th} millisecond after the CSI measurement result of the first neighboring cell is obtained, and Y is a positive integer; or an end moment of the valid duration of the CSI measurement result of the first neighboring cell is a start moment of a next CSI measurement periodicity.

S830: The terminal device receives handover indication information from the first network device.

Correspondingly, the first network device sends the handover indication information to the terminal device.

The handover indication information indicates the terminal device to hand over a serving cell from the first cell to a second cell.

S840: The terminal cell hands over the serving cell from the first cell to the second cell.

S850: The terminal device sends uplink indication information to a second network device in the second cell.

Correspondingly, the second network device receives, in the second cell, uplink indication information from the terminal device.

The uplink indication information indicates a first beam, and the first beam is associated with the CSI measurement result of the first neighboring cell within valid duration.

Optionally, if a beam configured in advance for CSI measurement is a beam used to prepare for handover and request a random access channel (random access channel, RACH) resource, or a beam configured in advance for CSI measurement is a beam indicated by a handover command, or a beam configured in advance for CSI measurement is a beam associated with a random access request message, the second network device considers by default that there is an available CSI measurement result, and may further indicate the terminal device to report a CSI measurement result corresponding to the beam, where the measurement result includes channel state information, the channel state information may include a transmission order (RI), a precoding matrix (PMI), downlink channel quality information (CQI), and the like.

Optionally, the first network device may alternatively send the indication information to the second network device, to indicate the beam having the CSI measurement result.

S860: The terminal device sends the CSI measurement result of the first neighboring cell to the second network device in the second cell.

Correspondingly, the second network device receives, in the second cell, the CSI measurement result of the first neighboring cell from the terminal device.

Optionally, the sent CSI measurement result of the first neighboring cell is a measurement result within a validity period; and when the CSI measurement result of the first neighboring cell is not within the validity period, the terminal device may not send the measurement result.

According to the technical solution of this application, the first network device configures the relationship between the measurement resource and the neighboring cell, so that the terminal device can determine, before performing cell handover, a beam on which a CSI of the neighboring cell needs to be measured, and actively report the beam to a new cell after the handover. This helps reduce a beam indication delay.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

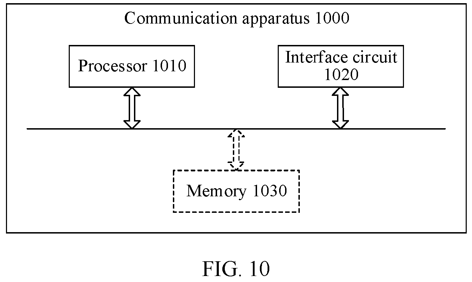

FIG. 9 and FIG. 10 each are a diagram of a structure of a possible communication apparatus according to an embodiment of this application. The communication apparatuses may be configured to implement the functions of the terminal device or the network device in the foregoing method embodiments, and therefore can also implement the beneficial effect in the foregoing method embodiments. In this embodiment of this application, the communication apparatus may be one of the terminals 102 to 104 shown in FIG. 1, or may be the network device 101 shown in FIG. 1, or may be a module (for example, a chip) used in the terminal or the network device.

As shown in FIG. 9, the communication apparatus 900 includes a processing unit 910 and a transceiver unit 920. The transceiver unit 920 may specifically include a receiving unit and a sending unit, which are respectively configured to implement a receiving function and a sending function. The processing unit 910 is configured to implement another function. The communication apparatus 900 is configured to implement functions of the terminal device or the network device in the method embodiment shown in FIG. 4, FIG. 6, or FIG. 8.

When the communication apparatus 900 is configured to implement the functions of the terminal device in the method embodiment shown in FIG. 4, the processing unit 910 is configured to determine a first channel state information-reference signal RS measurement result in a first cell, where the first cell is a current serving cell of the terminal device, and the first RS measurement result belongs to a subset of an RS measurement result of at least one candidate neighboring cell; the processing unit 910 is further configured to hand over the serving cell from the first cell to a second cell; and the transceiver unit 920 is configured to send the first RS measurement result to a second network device in the second cell.

Optionally, the transceiver unit 920 is further configured to receive handover indication information from the first network device; and the processing unit 910 is specifically configured to determine the first RS measurement result in the first cell based on the handover indication information.

Optionally, the transceiver unit 920 is further configured to receive RS measurement configuration information of at least one candidate neighboring cell from the first network device; and the processing unit 910 is specifically configured to: determine a second RS measurement result in the first cell based on the RS measurement result of the at least one candidate neighboring cell, where the second RS measurement result is a subset of the RS measurement result of the at least one candidate neighboring cell; and determine the first RS measurement result based on the handover indication information and the second RS measurement result, where the first RS measurement result is a subset of the second RS measurement result.

Optionally, the processing unit 910 is further configured to: determine, based on capability information of the terminal device, a quantity of cells associated with the second RS measurement result; or determine, based on preconfiguration information, a quantity of cells associated with the second RS measurement result.

Optionally, the processing unit 910 is further configured to perform measurement in the first cell based on the RS measurement configuration information of the at least one candidate neighboring cell within valid duration of the RS measurement configuration information of the at least one candidate neighboring cell, to obtain the RS measurement result of the at least one candidate neighboring cell.

Optionally, the processing unit 910 is further configured to: store the second RS measurement result within valid duration of the second RS measurement result; or the terminal device stores the first RS measurement result within valid duration of the first RS measurement result.

When the communication apparatus 900 is configured to implement the functions of the first network device in the method embodiment shown in FIG. 4, the processing unit 910 is configured to determine RS measurement configuration information of at least one candidate neighboring cell; and the transceiver unit 920 is configured to send the RS measurement configuration information of the at least one candidate neighboring cell in a first cell.

Optionally, the transceiver unit 920 is further configured to send handover indication information to the terminal device, where the handover indication information indicates the terminal device to hand over the serving cell from the first cell to the second cell.

For more detailed descriptions of the processing unit 910 and the transceiver unit 920, refer to related descriptions in the method embodiment shown in FIG. 4.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. The transceiver may specifically include a receiver and a transmitter, which are respectively configured to implement a receiving function and a sending function. Optionally, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement the method shown in FIG. 4, the processor 1010 is configured to implement a function of the processing unit 910, and the interface circuit 1020 is configured to implement a function of the transceiver unit 920.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, the radio frequency module or the antenna) in the terminal, where the information is sent by the terminal to the network device.

When the communication apparatus is a module used in a network device, the module in the network device implements the functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, the radio frequency module or the antenna) in the network device, where the information is sent by the network device to the terminal. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A measurement result transmission method, comprising:
determining, by a terminal device, a first reference signal RS measurement result in a first cell, wherein the first cell is a current serving cell of the terminal device, and the first RS measurement result belongs to a subset of an RS measurement result of at least one candidate neighboring cell; and
handing over, by the terminal device, the serving cell from the first cell to a second cell, and sending the first RS measurement result in the second cell.

2. The method according to claim 1, wherein the handing over, by the terminal device, the serving cell from the first cell to a second cell comprises:
receiving, by the terminal device, handover indication information; and
handing over, by the terminal device, the serving cell from the first cell to the second cell based on the handover indication information.

3. The method according to claim 2, wherein the determining, by a terminal device, a first RS measurement result in a first cell comprises:
determining, by the terminal device, the first RS measurement result in the first cell based on the handover indication information.

4. The method according to claim 2, wherein before the determining, by a terminal device, a first RS measurement result in a first cell, the method further comprises:
receiving, by the terminal device, RS measurement configuration information of the at least one candidate neighboring cell; and
performing, by the terminal device, measurement in the first cell based on the RS measurement configuration information of the at least one candidate neighboring cell, to obtain the RS measurement result of the at least one candidate neighboring cell; and
the determining, by a terminal device, a first RS measurement result in a first cell comprises:
determining, by the terminal device, a second RS measurement result in the first cell based on the RS measurement result of the at least one candidate neighboring cell, wherein the second RS measurement result is a subset of the RS measurement result of the at least one candidate neighboring cell; and
determining, by the terminal device, the first RS measurement result based on the handover indication information and the second RS measurement result, wherein the first RS measurement result is a subset of the second RS measurement result.

5. The method according to any one of claims 1 to 4, wherein the RS measurement configuration information of the at least one candidate neighboring cell comprises at least one of the following:
an index of a synchronization signal block SSB associated with an RS of the at least one candidate neighboring cell, a power offset of an RS of the at least one candidate neighboring cell relative to an SSB of the at least one candidate neighboring cell, a scrambling identifier of an RS of the at least one candidate neighboring cell, a bandwidth of an RS of the at least one candidate neighboring cell, a frequency domain position of an RS of the at least one candidate neighboring cell, or a time domain position of an RS of the at least one candidate neighboring cell.

6. The method according to claim 4, wherein the determining, by the terminal device, a second RS measurement result comprises:
determining, by the terminal device based on capability information of the terminal device, a quantity of cells associated with the second RS measurement result; or
determining, by the terminal device based on preconfiguration information, a quantity of cells associated with the second RS measurement result.

7. The method according to claim 4, wherein the second RS measurement result is one or more RS measurement results that are in the RS measurement result of the at least one candidate neighboring cell and that are greater than a first threshold; or
the second RS measurement result is first N RS measurement results that are in the RS measurement result of the at least one candidate neighboring cell and whose quality values are sorted in descending order, and N is a positive integer.

8. The method according to any one of claims 4 to 7, wherein the performing, by the terminal device, measurement in the first cell based on the RS measurement configuration information of the at least one candidate neighboring cell, to obtain the RS measurement result of the at least one candidate neighboring cell comprises:
performing, by the terminal device, measurement in the first cell based on the RS measurement configuration information of the at least one candidate neighboring cell within valid duration of the RS measurement configuration information of the at least one candidate neighboring cell, to obtain the RS measurement result of the at least one candidate neighboring cell.

9. The method according to claim 8, wherein a start moment of the valid duration of the RS measurement configuration information of the at least one candidate neighboring cell is a moment at which the RS measurement configuration information of the at least one candidate neighboring cell is received, and
an end moment of the valid duration of the RS measurement configuration information of the at least one candidate neighboring cell is an X^{th} slot after the RS measurement configuration information of the at least one candidate neighboring cell is received, and X is a positive integer; or
an end moment of the valid duration of the RS measurement configuration information of the at least one candidate neighboring cell is a Y^{th} millisecond after the RS measurement configuration information of the at least one candidate neighboring cell is received, and Y is a positive integer; or
an end moment of the valid duration of the RS measurement configuration information of the at least one candidate neighboring cell is a moment at which reconfigured RS measurement configuration information of the at least one candidate neighboring cell is received.

10. The method according to any one of claims 4 to 9, wherein the method further comprises:
storing, by the terminal device, the first RS measurement result within valid duration of the first RS measurement result.

11. The method according to claim 10, wherein a start moment of the valid duration of the first RS measurement result is a moment at which the serving cell of the terminal device is handed over from the first cell to the second cell, and
an end moment of the valid duration of the first RS measurement result is an M^{th} slot after the first RS measurement result is obtained, and M is a positive integer; or
an end moment of the valid duration of the first RS measurement result is an N^{th} millisecond after the first RS measurement result is obtained, and N is a positive integer; or
an end moment of the valid duration of the first RS measurement result is a moment at which RS measurement is performed again.

12. A measurement result transmission method, comprising:
sending, by a first network device, channel state information-reference signal RS measurement configuration information of at least one candidate neighboring cell in a first cell;
determining, by a terminal device, a first RS measurement result in the first cell based on the RS measurement configuration information of the at least one candidate neighboring cell, wherein the first cell is a current serving cell of the terminal device; and
handing over, by the terminal device, the serving cell from the first cell to a second cell, and sending the first RS measurement result to a second network device in the second cell.

13. The method according to claim 12, wherein the method further comprises:
sending, by the first network device, handover indication information to the terminal device, wherein the handover indication information indicates the terminal device to hand over the serving cell from the first cell to the second cell; and
the determining, by a terminal device, a first RS measurement result in the first cell based on the RS measurement configuration information of the at least one candidate neighboring cell comprises:
determining, by the terminal device, a second RS measurement result based on the RS measurement configuration information of the at least one candidate neighboring cell, wherein the second RS measurement result is a subset of an RS measurement result of the at least one candidate neighboring cell; and
determining, by the terminal device, the first RS measurement result based on the handover indication information and the second RS measurement result, wherein the first RS measurement result is a subset of the second RS measurement result.

14. A communication apparatus, comprising a processor, configured to execute a computer program or instructions stored in a memory, so that the communication apparatus performs the method according to any one of claims 1 to 11.

15. The communication apparatus according to claim 14, wherein the communication apparatus further comprises the memory, configured to store the computer program or the instructions.

16. A computer-readable storage medium, wherein the computer-readable storage medium stores a computer program or instructions; and when the computer program or the instructions are executed by a communication apparatus, the method according to any one of claims 1 to 11 is performed.

17. A chip system, comprising a processor, configured to invoke a computer program or instructions from a memory and run the computer program or the instructions, so that a communication apparatus on which the chip system is installed implements the method according to any one of claims 1 to 11.
